(19) Europäisches Patentamt / European Patent Office / Office européen des brevets

(11) **EP 3 740 891 B1**

(12) **FASCICULE DE BREVET EUROPEEN**

(45) Date de publication et mention de la délivrance du brevet:
**20.07.2022 Bulletin 2022/29**

(21) Numéro de dépôt: **19705779.7**

(22) Date de dépôt: **16.01.2019**

(51) Classification Internationale des Brevets (IPC):
***G06F 21/56*** [(2013.01)]     ***G06F 21/55*** [(2013.01)]

(52) Classification Coopérative des Brevets (CPC):
**G06F 21/554; G06F 21/566**

(86) Numéro de dépôt international:
**PCT/FR2019/050087**

(87) Numéro de publication internationale:
**WO 2019/141940 (25.07.2019 Gazette 2019/30)**

(54) **PROCÉDÉ ET DISPOSITIF DE DÉTECTION DE CHIFFREMENT, NOTAMMENT POUR ANTI-VIRUS RANÇONNEUR**

VERFAHREN UND VORRICHTUNG ZUM ERKENNEN EINER VERSCHLÜSSELUNG, INSBESONDERE FÜR EINE ANTI-RANSOMWARE-SOFTWARE

METHOD AND DEVICE FOR DETECTING ENCRYPTION, IN PARTICULAR FOR ANTI-RANSOMWARE SOFTWARE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.01.2018 FR 1850446**

(43) Date de publication de la demande:
**25.11.2020 Bulletin 2020/48**

(73) Titulaires:
• **INRIA - Institut National de Recherche en Informatique et en Automatique**
**78150 Le Chesnay (FR)**
• **État Français représenté par le Délégué Général pour l'Armement**
**75509 Paris Cedex 15 (FR)**

(72) Inventeurs:
• **PALISSE, Aurélien**
**86000 Poitiers (FR)**
• **LANET, Jean-Louis**
**87700 Aixe sur Vienne (FR)**
• **LE GUERNIC, Colas**
**35200 Rennes (FR)**
• **LUBICZ, David**
**35530 Servon sur Vilaine (FR)**

(74) Mandataire: **Cabinet Netter**
**36, avenue Hoche**
**75008 Paris (FR)**

(56) Documents cités:
**US-A1- 2015 058 987     US-A1- 2018 018 458
US-A1- 2018 020 013**

• **PALISSE AURÉLIEN ET AL: "Data Aware Defense (DaD): Towards a Generic and Practical Ransomware Countermeasure", 4 novembre 2017 (2017-11-04), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 192 - 208, XP047453206, ISBN: 978-3-642-17318-9 [extrait le 2017-11-04] cité dans la demande pages 196-198 pages 203-205**

## Description

L'invention concerne un dispositif de détection de chiffrement, applicable notamment à la détection de virus logiciels de rançon, ou « ransomware », que l'on appellera ici « virus rançonneur ».

Si les virus rançonneurs sont relativement anciens (le premier référencé date de 1989 : « PC Cyborg Trojan »), leur usage a explosé avec la montée en puissance d'internet. En particulier, en 2017, le virus rançonneur « WannaCry » aurait permis d'extorquer près de $100,000 US, infectant près de 300,000 ordinateurs dans plus de 150 pays. Les infections par virus rançonneur sur téléphone intelligent (« smartphones » en anglais) auraient bondi de plus de 250% pour la seule année 2017, et environ 20,000 ordinateurs seraient infectés tous les mois en France par un virus rançonneur.

Un virus rançonneur opère en chiffrant systématiquement et très vite un grand nombre de fichiers dans une machine, avec un code de chiffrement connu de son seul concepteur, lequel propose des contremesures de déchiffrement à titre très onéreux, moyennant « rançon ».

Les documents US 2018/020013 A1, US 2018/018458 A1 et US 2015/058987 A1 décrivent des techniques de détection de virus rançonneurs.

Comme on le verra plus loin, les antivirus connus travaillent selon des approches qui ne donnent pas véritablement satisfaction, soit qu'elles soient incomplètes, soit qu'elles conduisent à des traitements lourds, et ces traitements peuvent être facilement détectés par un virus rançonneur.

La présente invention vient améliorer la situation.

A ces fins, l'invention part d'un dispositif informatique, comprenant, de manière connue, un ordinateur avec une unité centrale et une mémoire, qui comprend une mémoire vive et une mémoire de masse comprenant des fichiers. L'unité centrale coopère avec la mémoire vive, et avec un système d'exploitation qui possède un noyau et est capable de faire exécuter par l'unité centrale des processus, découpés en fils, qui peuvent comprendre des fonctions d'accès aux fichiers.

Pour réaliser une détection de chiffrement, un modèle statistique d'écriture ordinaire sur entête de fichier est stocké dans la mémoire, et le dispositif comprend un programme sentinelle actif au niveau du noyau et agencé pour :

- récupérer pour chaque fil les requêtes en écriture dans un fichier émises, de telles requêtes comprenant comme argument une chaîne de caractères à écrire,
- calculer une première grandeur d'écart en fonction de la partie de la chaîne de caractères concernant l'entête du fichier et du modèle statistique d'écriture sur entête, puis
- délivrer une première alerte si la première grandeur d'écart dépasse un premier seuil.

Dans une variante, le programme sentinelle (P) peut également délivrer une deuxième alerte si la première grandeur d'écart est supérieure à un deuxième seuil, inférieur au premier seuil. Dans une mise en œuvre de cette variante, le programme sentinelle (P) peut être agencé pour :

a) définir une grandeur critique tirée de la première grandeur d'écart,
b) neutraliser le fil lorsque la grandeur critique dépasse le premier seuil,
c) mettre sous surveillance le fil lorsque la grandeur critique dépasse le deuxième seuil mais pas le premier seuil, et pour un fil qui est déjà sous surveillance,
d) dupliquer tous les parties de fichier visées par une requête d'écriture d'un tel fil, et
e) cesser de surveiller le fil si, au terme d'un délai T, le fil n'a pas émis de requête en écriture dont la grandeur critique est supérieure au deuxième seuil.

Cette neutralisation d'un fil peut comprendre l'une au moins des actions du groupe qui comprend : tuer le fil, bloquer le fil, isoler le fil.

En variante, le modèle statistique peut être représenté par une loi de probabilité P, et le calcul de la première grandeur d'écart comprend alors le calcul d'une vraisemblance par rapport à cette loi de probabilité du modèle statistique.

Dans une mise en œuvre de la variante précédente, la loi de probabilité P peut comprendre une loi de distribution de chaînes de m bits dans les entêtes de fichiers d'un corpus prédéterminé de fichiers, où m est un entier strictement positif inférieur à la taille d'entête maximale des fichiers dudit corpus prédéterminé.

En variante, le programme sentinelle est en outre agencé pour :

- calculer une grandeur de quantification du caractère aléatoire de la chaîne de caractères,
- calculer une deuxième grandeur d'écart, tirée de la première grandeur d'écart et de la grandeur de quantification du caractère aléatoire, et
- réitérer les étapes b) et c) en utilisant la deuxième grandeur d'écart comme grandeur critique.

Dans une mise en œuvre particulière de la variante précédente, le calcul de la quantification du caractère aléatoire peut comprendre un calcul d'un chi-carré d'une troncature à gauche de la chaîne de caractères.

L'invention prévoit en outre un procédé de détection de chiffrement mis en œuvre dans un dispositif informatique et comprenant les opérations suivantes :

    a) prévoir un modèle statistique d'écriture ordinaire sur entête,
    b) récupérer pour chaque fil les requêtes en écriture dans un fichier émises, de telles requêtes comprenant comme argument une chaîne de caractères à écrire,
    c) calculer une première grandeur d'écart en fonction de la partie de la chaîne de caractères concernant l'entête du fichier et du modèle statistique d'écriture sur entête, puis
    d) délivrer une première alerte si la première grandeur dépasse un premier seuil.

En variante, le procédé de détection de chiffrement peut être caractérisé en ce que l'opération d) comprend en outre :

d2) délivrer une deuxième alerte si la première grandeur d'écart est supérieure à un deuxième seuil, inférieur au premier seuil.

Dans une mise en œuvre de la variante précédente, le procédé de détection de chiffrement peut comprendre les opérations suivantes :

    e) définir une grandeur critique tirée de la première grandeur d'écart,
    f) neutraliser le fil lorsque la grandeur critique dépasse le premier seuil,
    g) mettre sous surveillance le fil lorsque la grandeur critique dépasse le deuxième seuil mais pas le premier seuil, et pour un fil qui est déjà sous surveillance,
    h) dupliquer tous les parties de fichier visées par une requête d'écriture d'un tel fil, et
    i) cesser de surveiller le fil si, au terme d'un délai T, le fil n'a pas émis de requête en écriture dont la grandeur critique est supérieure au deuxième seuil.

Les opérations h) et i) peuvent être réalisées parallèlement aux opérations c) à g).

Dans une mise en œuvre particulière de la variante précédente, le procédé de détection de chiffrement peut être caractérisé en ce que la neutralisation d'un fil comprend l'une au moins des actions du groupe qui comprend : tuer le fil, bloquer le fil, isoler le fil.

En variante, le procédé de détection de chiffrement peut être caractérisé en ce que l'opération a) comprend le fait de prévoir une loi de probabilité P représentant le modèle statistique, et en ce que le calcul de la première grandeur d'écart comprend le calcul d'une vraisemblance par rapport à cette loi de probabilité du modèle statistique.

Dans une mise en œuvre particulière de la variante précédente, la loi de probabilité P peut comprendre une loi de distribution de chaînes de m bits dans les entêtes de fichiers d'un corpus prédéterminé de fichiers, où m est un entier strictement positif inférieur à la taille d'entête maximale des fichiers dudit corpus prédéterminé.

Le procédé peut encore comprendre en outre les opérations suivantes :

-   calculer une grandeur de quantification du caractère aléatoire de la chaîne de caractères,
-   calculer une deuxième grandeur d'écart, tirée de la première grandeur d'écart et de la grandeur de quantification du caractère aléatoire, et
-   réitérer les étapes e) à g) en utilisant la deuxième grandeur d'écart comme grandeur critique.

Dans une mise en œuvre particulière de la variante précédente, le calcul de la quantification du caractère aléatoire comprend un calcul d'un chi-carré d'une troncature à gauche de la chaîne de caractères.

Par ailleurs, la détection de chiffrement peut être appliquée comme contre-mesure des logiciels de rançon.

D'autres caractéristiques et avantages de l'invention apparaîtront mieux à la lecture de la description qui suit, tirée d'exemples donnés à titre illustratif et non limitatif, tirés des dessins sur lesquels :

-   la figure 1 représente une vue générale d'un ordinateur selon l'invention ;
-   la figure 2 représente l'architecture du programme sentinelle 32 de la figure 1 ;
-   la figure 3 représente un premier mode de mise en œuvre du module d'analyse comportementale de la figure 2 ;
-   la figure 4 représente une deuxième mise en œuvre du module d'analyse comportementale de la figure 2 ;
-   la figure 5 représente un diagramme du module de décision de la figure 2 ;
-   la figure 6 représente la table de surveillance 46 de la figure 2 ;
-   la figure 7 représente le module de mise sous surveillance de la figure 2 ; et
-   la figure 8 représente le module de surveillance de la figure 2, et

- la figure 9 représente une variante du module de décision de la figure 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

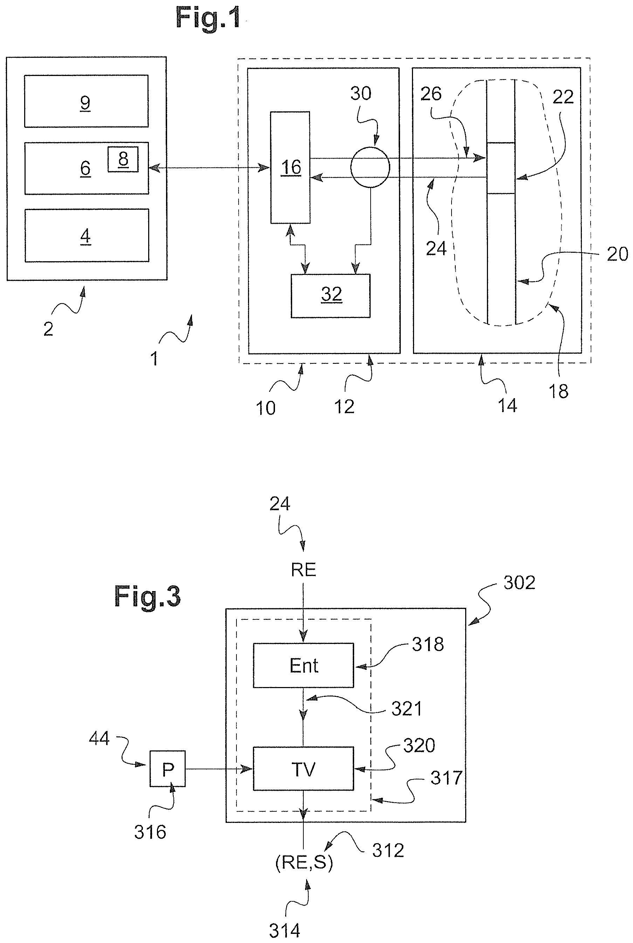

La figure 1 représente une vue générale d'un ordinateur 1 selon l'invention.

L'ordinateur 1 comprend une machine 2, comprenant une unité centrale 4 et une mémoire de masse 6 propre à stocker des fichiers désignés génériquement par la référence 8.

L'unité centrale 4 coopère avec un système d'exploitation 10, qui comprend un cœur ou noyau (« kernel ») et des programmes.

L'ordinateur comprend aussi une mémoire système, qui comprend une mémoire vive (RAM). Il peut être prévu un espace d'échange (« swap ») avec la mémoire de masse, s'il est nécessaire d'augmenter la mémoire système.

Le système d'exploitation stocké dans la mémoire de masse se charge dans la mémoire système. Il définit dans celle-ci un espace noyau 12, où travaille le noyau, et un ou plusieurs espaces utilisateurs 14. L'espace noyau 12 assure la séparation des espaces utilisateurs entre eux. Il comprend aussi un gestionnaire de mémoire 16, qui réalise la gestion des requêtes d'accès (écriture et/ou lecture) aux fichiers 8 de la mémoire de masse. Le gestionnaire de mémoire comprend un système de gestion de fichiers (ou « système de fichiers » en anglais « File system »).

Dans le cas de l'utilisation de Microsoft Windows™ comme système d'exploitation 10, le système de fichiers peut être :

- le système de fichiers NTFS (New Technology File System) pour les systèmes d'exploitation récents (à partir de Microsoft Windows™ NT, NT 3.1, Microsoft Windows™ 2000 et leurs successeurs (XP, Vista, 7, etc.)), ou
- une table d'allocation de fichiers (dite FAT pour « File Allocation Table ») pour les versions du système d'exploitation plus anciennes.

Les espaces noyau et utilisateur dans un système d'exploitation sont aussi appelés « anneaux de protection » (ou « rings » en anglais). Chaque anneau est associé à un certain nombre de permissions, privilèges et priorités. Les anneaux sont en outre inclus successivement les uns dans les autres, ce qui peut créer une hiérarchie, du plus haut niveau de privilège au moins haut niveau de privilège.

Dans le système d'exploitation Microsoft Windows™, le noyau est typiquement dans l'anneau 0 (« ring 0 » en anglais) et les espaces utilisateurs dans l'anneau 3 (« ring 3 » en anglais). Windows contient a priori 4 anneaux, avec des processus intermédiaires dans les anneaux 1 et 2.

Chaque espace utilisateur 14 et l'espace noyau peuvent exécuter des processus 18 découpés en fils ou « threads » 20 comprenant des instructions 22, dont des requêtes en écriture, telles que 24. Le fil 20 envoie une requête en écriture 24 au gestionnaire de mémoire 16. Celui-ci répond par un retour de requête 26 indiquant si la requête a été exécutée ou non. Ce retour peut comprendre d'autres détails sur l'exécution de la requête.

De façon connue, le noyau exécute une sonde système 30 (ou sonde HIDS « *Host Intrusion Detection System* »). La sonde HIDS 30 a pour fonction de dupliquer tous les appels système des fils utilisateurs 20, en priorité et de manière transparente, c'est-à-dire sans être détectable par un fil utilisateur 20. Ici, la sonde HIDS va dupliquer sans faire exécuter les requêtes en écriture, c'est-à-dire dupliquer le contenu des requêtes en écriture mais sans les exécuter. Par la suite, on désignera indifféremment dupliquer une requête en écriture et dupliquer sans faire exécuter. De même, et on désignera indifféremment une requête et son contenu, sauf lorsque la distinction sera significative.

Pour combattre ces virus rançonneurs, les antivirus peuvent opérer classiquement par détection d'une signature propre au virus rançonneur. Cela ne marche que pour les virus déjà répertoriés. Ils peuvent également surveiller les appels à des librairies de chiffrement (e.g., CryptoAPI), par exemple à l'aide d'une sonde HIDS. Mais cela ne marche pas si le virus rançonneur embarque son propre système de chiffrement.

Les antivirus peuvent encore analyser systématiquement toutes les requêtes d'écriture à l'aide d'une sonde HIDS, et dupliquer, au moins temporairement, certains au moins des fichiers sujets à requêtes d'écriture, pour en garder une version non chiffrée. Mais c'est un traitement extrêmement lourd.

Ainsi, les approches antivirus rançonneurs connues ne donnent pas véritablement satisfaction, car elles sont incomplètes, et/ou conduisent à des traitements lourds, qui peuvent être facilement détectés par le virus rançonneur.

Selon l'invention, le noyau exécute un programme anti-virus rançonneur 32, que l'on appellera ici programme sentinelle. La sonde HIDS transmet à ce programme sentinelle 32 toutes les requêtes en écriture de sorte que le programme sentinelle 32 peut les analyser, et agir sur les fils utilisateurs 20 en cas de menace.

Etant placés au niveau du noyau, le programme sentinelle 32 et la sonde HIDS 30 sont prioritaires sur tous les fils 20 de l'espace utilisateur. Le programme sentinelle 32 peut également émettre lui-même des requêtes d'écriture 24.

Le code de la sonde HIDS 30 dépend du système d'exploitation 10 de l'ordinateur 1 à protéger.

Ainsi, sous un système Microsoft Windows™, Microsoft met à disposition des développeurs une infrastructure de développement (ou environnement de travail, dit WDK) de pilotes de systèmes de fichiers (en anglais « file system drivers framework »), appelée « File System Minifilter Drivers » (FSMD). Chaque pilote FSMD possède une « altitude », à laquelle correspond un certain niveau de privilèges.

L'environnement de développement fourni par Microsoft (i.e., WDK) permet de réaliser une sonde HIDS avec un driver de type : file system minifilter. Il est également possible de développer une sonde similaire avec un « legacy filter driver », réécrit.

Sur la plateforme Mac OS X, il est également possible de développer une sonde, en surveillant les entrées/sorties depuis l'espace utilisateur (e.g., https://objective-see.com/blog/blog 0x0F.html). Si on veut travailler depuis le noyau, des solutions non officielles sont disponibles sur github (e.g., https://github.com/slavaim/MacOSX-Kernel-Filter).

Pour des versions récentes de Linux (Linux 4.1 LTS et plus), la sonde HIDS peut comprendre l'outil BCC (pour BPF Compiler Collection). Cette sonde HIDS agencée pour Linux instrumente du code noyau depuis l'espace utilisateur. La méthode la plus commode pour l'implémenter est de développer un module noyau modifié qui intercepte les appels systèmes souhaités. Il est également possible de modifier directement le code source du système de fichiers (par exemple le système de fichiers ZFS).

L'invention opère en analysant toutes les instructions provenant de fils utilisateurs 20. Cette analyse se fait de manière transparente et simple (économe en temps de calcul). L'invention s'intéresse a priori :

- aux requêtes en écriture 24, car c'est par elles que les virus rançonneurs opèrent, et
- aux processus utilisateurs, car les virus rançonneurs génériques sont des virus « simples » de conception dont le but est d'infecter un grand nombre de machines et de chiffrer un grand nombre de fichiers.

Les virus rançonneurs ne procèdent pas à des attaques sophistiquées infectant le noyau, pour contourner la séparation entre les espaces utilisateurs que fait le noyau. En effet, ces attaques sophistiquées sont moins génériques (c'est-à-dire qu'elles ne fonctionnent pas sur toutes les machines) et plus coûteuses à mettre en place (cela peut demander l'achat de failles non corrigées par les concepteurs de système d'exploitation, dites *zero-day,* ce qui augmente le coût financier d'un tel virus).

En variante, l'invention peut également s'intéresser aux opérations d'écritures du système (ou provenant d'un fil noyau) mais uniquement quand il s'agit de requêtes concernant la gestion de la mémoire virtuelle (ou pagination, en anglais « expanded memory »).

En effet il est possible de modifier indirectement un fichier en travaillant sur une copie (mapping) en mémoire virtuelle d'un fichier ou d'une portion de celui-ci. Dans ce cas, c'est le système qui répercutera les modifications appliquées au fichier en mémoire de travail (éventuellement virtuelle) sur le disque. On peut repérer ces modifications en s'intéressant aux opérations d'écritures du système (ou provenant d'un fil noyau), mais uniquement quand il s'agit de requêtes d'écriture depuis la mémoire virtuelle vers le disque. On peut alors ensuite remonter aux fils utilisateurs ayant émis ces requêtes sur mémoire virtuelle.

L'invention n'étudie que les requêtes d'écriture et non les autres instructions, afin de gagner en légèreté. Toutefois, les autres requêtes/instructions peuvent également être traitées, par exemple pour avoir d'autres fonctions antivirus.

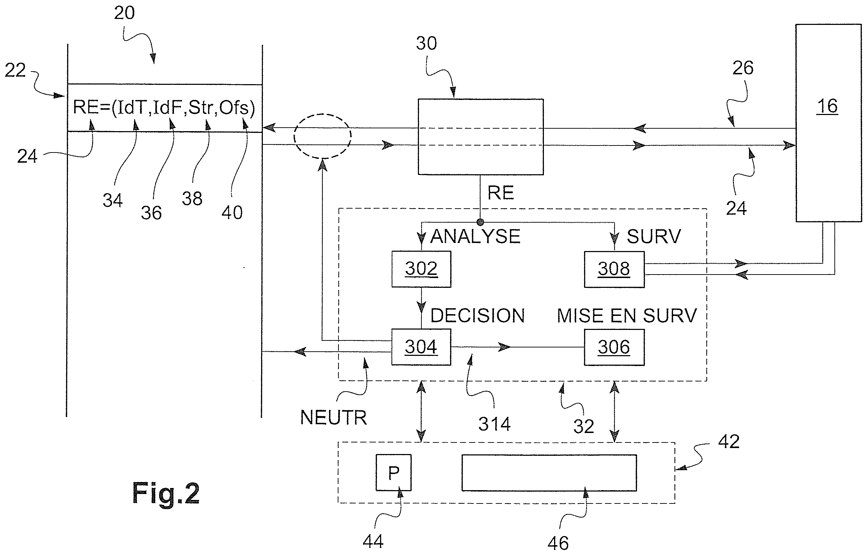

La figure 2 représente l'architecture du programme sentinelle 32 de la figure 1.

Ce programme sentinelle 32 coopère avec la sonde HIDS 30. Celle-ci est interposée entre tout fil utilisateur 20 et le gestionnaire de mémoire 16. Elle duplique et transmet toutes les requêtes en écriture 24 des fils 20 au programme sentinelle 32.

Une requête en écriture 24 sur un fichier 8 est notée RE. Elle peut comprendre au moins les quatre éléments suivants :

- un identifiant de fil IdT (référencé 34), désignant le fil 20 ayant émis la requête 24,
- un identifiant de fichier IdF (référencé 36), désignant le fichier 8 concerné par la requête en écriture 24,
- une chaîne de caractères Str (référencée 38) à écrire sur le fichier 8, et
- une position d'écriture Ofs, de l'anglais « offset », (référencée 40), désignant l'emplacement dans le fichier 8 à partir duquel sera écrite la chaîne de caractères 36.

On peut également prévoir un identifiant de processus IdP (ou PID, en anglais « process ID »). Ici, on considère que cet identifiant de processus IdP est incorporé à l'identifiant de fil IdT (ou TID, en anglais « thread ID »). De façon générale, cet identifiant IdP peut aussi être prévu dans RE séparément de l'identifiant de fil.

Le programme sentinelle 32 coopère avec sa mémoire de travail 42, à savoir la partie de la mémoire système qui lui est allouée. Cette mémoire de travail 42 peut stocker un modèle statistique préétabli 44, relatif à l'écriture ordinaire (i.e. usuelle, non chiffrée) sur entête de fichier, et une table de surveillance 46. Le programme sentinelle 32 comprend un module (sous-programme) d'analyse comportementale 302, un module (sous-programme) de décision 304, un module (sous-programme) de mise sous surveillance 306 et un module (sous-programme) de surveillance 308.

Pour créer le modèle statistique préétabli 44 d'écriture usuelle sur entête de fichier, on peut considérer l'ensemble des entêtes (ou « headers » en anglais) d'un corpus de fichiers usuels non chiffrés, l'entête de fichier étant ses premiers bits, typiquement ses 2048 premiers bits. Ensuite, à partir de ce corpus de fichiers, on peut construire un modèle, sur lequel on reviendra. Cela peut se faire à l'avance, donnant le modèle statistique sous forme de fichiers stockés en mémoire de masse, et chargés en mémoire système pour exécution.

Le Demandeur a observé que, lorsqu'un entête de fichier est chiffré par une requête en écriture 24, il diffère alors sensiblement du modèle statistique d'écriture ordinaire sur entête. On calcule alors une grandeur d'écart en fonction de la requête en écriture 24 et du modèle statistique 44 d'écriture ordinaire sur entête de fichier.

Autrement dit :

- on prévoit un modèle statistique d'écriture ordinaire sur entête,
- on détecte les fils contenant une requête d'écriture dans un fichier, l'argument de chaque requête comprenant une chaîne de caractères à écrire,
- on calcule une première grandeur d'écart en fonction de la partie de la chaîne de caractères concernant l'entête du fichier et du modèle statistique d'écriture sur entête.

En fonction de cette grandeur d'écart, le programme sentinelle 32 va pouvoir mener différentes actions, comme interrompre, bloquer ou isoler le fil 20 auteur du chiffrement.

Plus généralement, on délivre une première alerte si la première grandeur dépasse un premier seuil.

Cette technique de vérification portant essentiellement sur des entêtes de fichier a pour avantage d'être légère, d'où un coût en calcul minime pour les programmes anti-virus rançonneur basés sur cette technique.

La table de surveillance 46 est prévue pour recenser tous les fils et processus suspects détectés par le programme sentinelle 32, et stocker leurs identifiants, au moins temporairement. Cette table de surveillance 46 peut être en outre prévue pour, après traitement d'une attaque par un virus rançonneur, retourner à un état antérieur à cette attaque. On reviendra sur sa structure ultérieurement.

Le programme sentinelle 32 comprend en outre un module (i.e. sous-programme) d'analyse comportementale 302, un module de décision 304, un module de mise sous surveillance 306 et un module de surveillance 308.

Le module d'analyse comportementale 302 récupère en entrée la requête en écriture 24 et le modèle statistique 44 puis calcule une valeur comportementale 312 (notée S). Cette valeur (ou indicateur) représente un écart entre la requête en écriture 24 et le modèle statistique 44 d'écriture sur entête. RE désigne ici indifféremment la requête en écriture, ou un identifiant de celle-ci, le contenu de la requête en écriture, ou un pointeur vers ce contenu. Le module d'analyse comportementale 302 renvoie ensuite en sortie la valeur S en correspondance de la requête RE, ou bien une paire requête-valeur (RE, S) 314, qui va vers le module de décision 304.

Le module de décision 304 récupère cette correspondance requête-valeur (RE, S) en entrée, et peut réagir en fonction de la valeur comportementale S. Cette réaction peut porter sur :

- le fil 20 qui contient la requête, que l'on peut par exemple interrompre,
- les requêtes en écriture 24 de ce fil, ou
- les retours de requête 26 qui sont destinés à ce fil.

Autrement dit, lorsque la valeur comportementale dépasse un ou plusieurs seuils, le module de décision peut émettre des alertes selon les seuils.

Par exemple, le module de décision 304 peut émettre une première alerte si un premier seuil est dépassé, et une deuxième alerte si un deuxième seuil inférieur au premier est dépassé. La première alerte peut concerner une menace avérée, et la deuxième une menace potentielle mais non avérée. Ce que l'on appelle ici « alerte » correspond à des alertes internes dans la machine, qui n'ont pas nécessairement vocation à être reflétées vers l'utilisateur.

Le fait de pouvoir agir sur les échanges entre le fil 20 et le gestionnaire de mémoire 16 permet avantageusement d'inhiber une ou plusieurs requêtes d'un fil 20 (les rendre inopérantes), en le laissant continuer à s'exécuter pour le reste, et ce sans même que le fil 20 s'en rende compte. En effet, les virus rançonneurs pourraient réagir à la détection d'une interruption d'un premier fil 20 de chiffrement par une contre-contre-mesure, par exemple en changeant de stratégie ou en relançant d'autres fils 20 de chiffrement sur les mêmes fichiers.

Le module de décision 304 peut aussi envoyer la requête d'écriture 24 au module de mise sous surveillance 306.

Le module de mise sous surveillance 306 est agencé pour recevoir la désignation d'un fil 20 considéré comme suspect par le programme sentinelle 32. Il peut démarrer ou mettre à jour la surveillance de ce fil suspect 20. Ici, les expressions « fil sous surveillance » et « fil suspect » sont considérées comme synonymes.

Le module de surveillance 308 détermine pour chaque fil 20 (d'identifiant IdT) si ce fil 20 est déjà sous surveillance. Le cas échéant, le module de surveillance 308 applique des contre-mesures à l'encontre de ce fil 20 d'identifiant IdT.

Les modules de décision 304, de mise sous surveillance 306 et de surveillance 308 peuvent encore émettre des requêtes d'écriture 24 et recevoir des retours de requête 26 du gestionnaire de mémoire 16. Pour cela, les modules de mise sous surveillance 306 et de surveillance 308 coopèrent avec la table de surveillance 46. Cela permet en cas de détection d'un virus rançonneur de rétablir la version en clair des fichiers qui ont été chiffrés, sans que le virus rançonneur ne s'en rende compte, puisque le programme sentinelle est plus proche du noyau que lui.

La figure 3 représente un premier mode de mise en œuvre du module d'analyse comportementale 302 de la figure 2.

Dans cette mise en œuvre de l'invention, le module d'analyse comportementale 302 étudie préférentiellement le comportement des requêtes en écriture sur les entêtes des fichiers. Ces entêtes ont la particularité de contenir entre autres des motifs ou « patterns », spécifiques à des formats de fichiers usuels, reconnus par leurs extensions : extensions («.doc», «.docx», «.docm») pour les documents Microsoft Word™, extension «.txt» pour les documents texte, extension «.pdf» pour les documents Acrobat™), fichiers multimédias («.avi», «.mp4», «.mkv» pour les fichiers vidéo, «.flac», «.mp3», «.wav» pour les fichiers audio), etc. Cette liste de types, formats et extensions est non exhaustive, et toute extension de fichier comporte ses propres patterns caractéristiques que le modèle statistique peut couvrir.

En variante le modèle statistique peut comporter des sous-modèles statistiques pour traiter plus finement des formats, d'extensions et/ou d'emplacements de fichiers particuliers. Ainsi, le programme sentinelle peut gagner en précision en présence de requêtes portant sur des répertoires ou des zones de mémoire dédiées spécifiquement à un type ou une famille de types de fichier (par exemple mémoire d'archivage).

Le module d'analyse comportementale 302 reçoit en entrée la requête en écriture RE et un modèle statistique 44 comprenant une loi de probabilité 316 notée P, comme on le verra.

Le module d'analyse comportementale 302 effectue une série d'opérations sur entête 317. Cette série d'opérations comprend :

- une opération d'extraction 318 sur la requête en écriture, et
- une opération de calcul de vraisemblance 320.

Le but de l'opération d'extraction 318 est de positionner l'effet de la requête en écriture dans l'entête Ent00 du fichier concerné IdF. La requête comprend une chaîne Str, et une information de position Ofs. Si Ofs = 0, la chaîne Str va constituer le nouvel entête Ent01 du fichier, ou du moins son début. Si Ofs est supérieur à la taille L_Ent de l'entête du fichier, cet entête reste inchangé. Si Ofs est compris entre 0 et L_Ent, on peut prendre le nouvel entête: Ent01 = Gauche(Ent00, Ofs) + Gauche(Str, L_Ent - Ofs), où

Gauche(x,n) est la fonction qui donne les n premiers caractères d'un chaîne x (c'est-à-dire qui conserve la partie gauche de la chaîne, ou troncature à gauche), et

« + » est la fonction de concaténation de chaînes de caractères.

La partie du nouvel entête qui émane de la requête en écriture est notée Ent_RE, avec

$$Ent\_RE = Gauche(Str, L\_Ent - Ofs)$$

Le module d'analyse comportementale 302 peut travailler sur une grandeur Ent99, qui peut être le nouvel entête Ent01 du fichier, ou la partie Ent_RE de ce nouvel entête qui émane de la requête en écriture.

Il est estimé actuellement qu'il faut que la taille de la chaîne soit au minimum de 1024 bits pour que les résultats soient significatifs. Donc on prend au moins 1024 bits parmi les 2048 premiers bits d'un fichier.

On effectue ensuite un calcul de vraisemblance logarithmique 320 (ou test de vraisemblance logarithmique, en anglais « *log likelihood ratio* ») de l'ensemble d'événements Ent99 selon la loi de probabilité 316 par rapport à une loi de probabilités d'un modèle de virus rançonneur aléatoire, notée Q. Il en résulte une vraisemblance 320, que l'on transforme en la valeur S précitée, appelée aussi valeur comportementale 312. Elle est associée à la requête en écriture RE dans une paire requête-valeur (RE, S) que le module d'analyse comportementale 302 retourne en sortie.

La loi de probabilité P utilisée peut être définie comme suit :

- on considère un corpus prédéterminé de fichiers ;
- on extrait les entêtes de tous les fichiers ;
- on calcule la distribution DIS_17 des séquences de 17 bits dans ces entêtes, par rapport aux $2^{17}$ séquences de 17 bits différentes qui sont possibles
- après renormalisation éventuelle, la distribution DIS_17 fournit la loi de probabilité P.

La loi de probabilité d'un modèle de virus rançonneur aléatoire Q est une loi de probabilités équiprobable, c'est-à-dire que chaque transition est équiprobable, ou que la loi de distribution des chaînes de 17 bits sous-jacente est uniforme.

L'homme du métier comprendra que cette distribution est équivalente à une chaîne de Markov d'ordre 16, qui exprime la probabilité de la valeur d'un bit, connaissant les 16 précédents. Ici, l'expression « chaîne de Markov » désigne indifféremment la chaîne de Markov elle-même, et/ou sa distribution induite. Une chaîne de Markov peut être représentée sous la forme de son automate probabiliste ou de sa matrice stochastique. Voir à cet égard :
https://en.wikipedia.org/wiki/Markov_chain

En variante, on peut généraliser à d'autres chaînes de Markov, d'ordre k≠16, qui expriment la probabilité de la valeur d'un bit, en connaissant les k précédents.

On revient maintenant sur la vraisemblance et le test de vraisemblance logarithmique.

La vraisemblance est une notion connue dans l'état de l'art des probabilités, que l'on va maintenant décrire brièvement. On appelle vraisemblance associée à la loi de probabilité P la fonction $L_p$ qui à un n-uplet d'événements $(x_1,...,x_n)$ de P associe la quantité :

$$L_P(x_1 \dots x_n) = \prod_{i=1}^{n} P(x_i) \qquad [I]$$

Cette notion s'interprète ainsi : si on suppose que le n-uplet $(x_1,...,x_n)$ est une suite particulière d'événements indépendants (au sens des probabilités), alors $L_p$ constitue la vraisemblance du fait que cette suite d'événements particulière advienne parmi toutes les suites d'événements possibles.

On appelle test de vraisemblance du n-uplet d'événements $(x_1,...,x_n)$ selon la loi de probabilités Q par rapport à la loi de probabilités P le calcul du rapport (ou « ratio » en anglais) de la vraisemblance associée à la loi de probabilité Q du n-uplet d'événements $(x_1,...,x_n)$ sur la vraisemblance associée à la loi de probabilités P du n-uplet d'évènements $(x_1,...,x_n)$. C'est-à-dire le calcul du taux t :

$$t = \frac{L_Q(x_1 \dots x_n)}{L_P(x_1 \dots x_n)} \qquad [II]$$

Le test de vraisemblance s'interprète ainsi : on calcule non pas la vraisemblance que le n-uplet d'événements $(x_1,...,x_n)$ advienne « dans l'absolu » selon une des deux lois Q ou P, mais à quel point il est plus probable que le n-uplet d'évènements $(x_1,...,x_n)$ advienne en étant régi par la loi Q plutôt que par la loi P. Si t est supérieur à 1, alors il est plus probable que ce soit la loi Q que la loi P qui régisse la suite d'évènements $(x_1,...,x_n)$, et c'est d'autant plus vrai que t est grand.

Un test de vraisemblance logarithmique du n-uplet d'évènements $(x_1,...,x_n)$ selon la loi de probabilités Q par rapport à la loi de probabilités P est comprend alors le calcul du logarithme du résultat du test de vraisemblance du n-uplet d'évènements $(x_1,...,x_n)$ selon la loi de probabilités Q par rapport à la loi de probabilités P. Autrement dit, le calcul de la quantité s suivante, appelée taux logarithmique de vraisemblance :

$$s = \log\left(\frac{L_Q(x_1 \dots x_n)}{L_P(x_1 \dots x_n)}\right) \qquad [III]$$

La détermination de la quantité s devient alors calculée par la formule suivante :

$$s = \left[\sum_{i=1}^{n} \left[\log\big(Q(x_i)\big) - \log\big(P(x_i)\big)\right]\right] \qquad [IV]$$

Le test de vraisemblance logarithmique est avantageux pour deux raisons majeures :

- les vraisemblances étant des petits nombres, on limite les problèmes de précision (en anglais « *underflow* »), et
- on remplace le calcul de vraisemblance qui est un produit de quantités (probabilités d'évènements) par une somme de quantités. En effet, On rappelle qu'en informatique, les additions sont beaucoup plus économes en temps/puissance de calcul que les multiplications, ce qui permet donc au programme sentinelle 32 de gagner encore en légèreté.

Dans le cadre de l'invention, la loi de probabilité utilisée peut être une distribution de séquences de 17 bits (par exemple celle dans le corpus précité). La suite d'évènements peut comprendre la suite des tirages pour chaque bit de Ent99 d'une valeur binaire en connaissant les 16 bits précédents, ou de manière indifférente la distribution mesurée des séquences de 17 bits dans Ent99.

Pour la suite, on désignera de manière indifférenciée séquence de n bits et nombre de n chiffres en base 2.

Pour les besoins de l'invention, il suffit de mémoriser la loi de probabilité elle-même, ainsi que la formule [IV] du taux logarithmique de vraisemblance, ci-dessus.

La mémorisation de la loi de probabilité peut se faire sous la forme d'une liste K = ($K_0$, $K_1$, ... , $K_i$, ... , $K_N$) de probabilités de transitions.

On considère une séquence i de 16 bits. La « transition » consiste à y ajouter (concaténer) un bit *j* (égal à 0 ou 1). On note $P_i(j)$ la probabilité d'avoir le bit *j* ajouté à la suite de la séquence i. On appelle cette probabilité une « probabilité conditionnelle », c'est-à-dire une probabilité d'avoir l'évènement *j* sous la condition *i*. On sait qu'une probabilité est un nombre compris entre 0 et 1.

Chaque ligne de la liste K peut s'écrire :

$$K_{2.i+j} = P_i(j) \qquad [V]$$

Où:

2. *i* + *j* est la séquence de 16 bits *i,* à laquelle on a concaténé le bit *j*. En effet, multiplier par deux un nombre en base 2 revient à rajouter un 0 à la fin du nombre (de la même façon que multiplier un nombre par dix en base dix revient également à rajouter un 0 à la fin du nombre). Si le dernier bit d'un nombre en base 2 vaut 0, ajouter *j* à ce nombre revient à remplacer ce 0 par *j*.

De plus, la liste K vérifie alors :

$$K_{2.i+0} + K_{2.i+1} = P_i(0) + P_i(1) = 1 \qquad [VI]$$

Cette égalité s'interprète de la façon suivante : si l'on a la séquence de 16 bits i, il n'y a que deux possibilités pour la valeur du bit suivant : 0 ou 1. Aussi la somme des probabilités de ces deux évènements (« *j* = 0 » et « *j* = 1 ») en sachant *i* doit être égale à 1.

Cette forme particulière n'est pas obligatoire, et d'autres structures peuvent être utilisées pour mémoriser la loi de probabilité P sous une forme adaptée aux calculs nécessaires pour le module d'analyse comportementale 302. Par exemple, dans une autre mise en œuvre, on peut mémoriser la loi de probabilité P sous la forme d'une loi de distribution des chaînes de 17 bits.

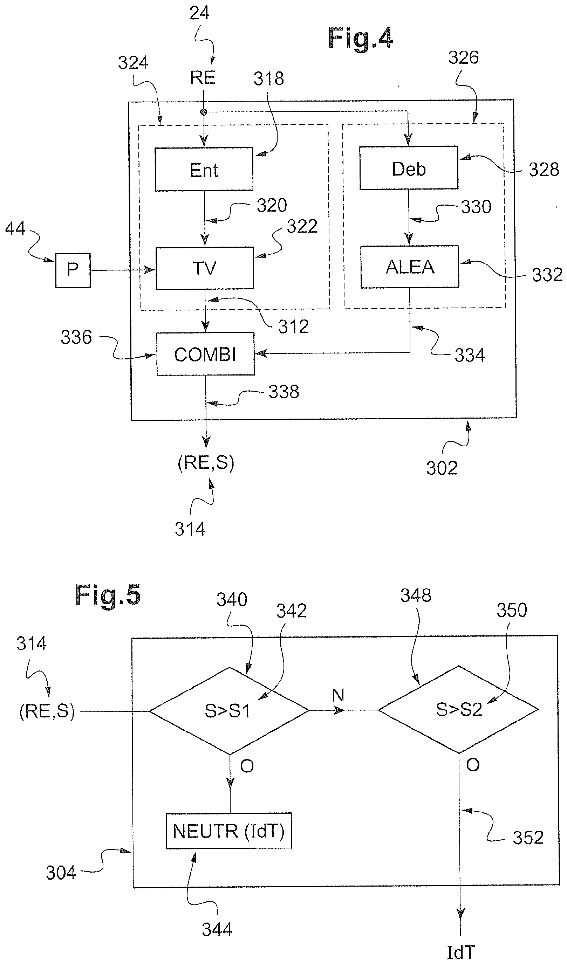

La figure 4 représente une deuxième mise en œuvre du module d'analyse comportementale 302 de la figure 2.

Le module d'analyse comportementale 302 reçoit en entrée la requête en écriture RE et un modèle statistique 44 comprenant une loi de probabilité 316 notée P.

Le module d'analyse comportementale 302 effectue dans une première branche 324 la série d'opération sur entête 317 décrite ci-dessus, en référence à la figure 3. Le résultat de cette série est une première valeur comportementale $C_1$.

A côté de cette première branche 324, le module d'analyse comportementale 302 peut comprendre une deuxième branche 326 où il effectue, en parallèle, une autre série d'opérations. La première opération peut être une troncature 328, qui ne garde que le début 330, noté Deb_Str, de la chaîne de caractères Str. Ce début Deb_Str peut être typiquement les premiers 16 ko (kilo octets) de la chaîne de caractères Str. La seconde opération peut être un calcul de l'aléatoire 332 en prenant comme argument Deb_Str et en renvoyant une deuxième valeur comportementale appelée valeur d'aléatoire 334 et notée $C_2$. Par « calcul de l'aléatoire », on entend ici le calcul d'une grandeur de quantification du caractère aléatoire de Deb_Str.

En sortie de ces deux branches 324 et 326, le module d'analyse comportementale 302 effectue une opération de combinaison 336 des deux valeurs $C_1$ et $C_2$ pour calculer une troisième valeur 338, notée S. Cette valeur S peut être vue comme une synthèse du comportement de la chaîne Str par rapport aux deux indicateurs que sont le résultat du test de vraisemblance 320 et le résultat du calcul d'aléatoire 332.

Cette troisième valeur S est associée à la requête en écriture RE dans une paire requête-valeur (RE, S) que le module d'analyse comportementale 302 retourne en sortie.

L'opération de calcul de l'aléatoire 332 comporte un calcul de $\chi^2$ (chi-carré), sur lequel on reviendra.

La combinaison 336 des deux valeurs 312 et 334 peut être l'une des opérations suivantes :

- une fonction de deux variables, prenant en entrée les deux valeurs 312 et 334 et renvoyant une grandeur unique synthétisant les deux indicateurs,

- l'appairage de ces deux valeurs dans un couple $(C_1, C_2)$ afin de préserver un maximum d'information,

ou toute autre opération informatique usuelle pour combiner deux variables informatiques.

Cette variante du module d'analyse comportementale 302 combine donc la détection d'aléatoire, dans la chaîne Str elle-même, avec la vérification des entêtes modifiés par la requête d'écriture, sur la base d'un modèle statistique, cette vérification étant celle décrite ci-dessus, à propos de la mise en œuvre selon la figure 3.

Pour rappel, un processus de chiffrement réalise une écriture de bits dont la répartition est aléatoire, afin d'éviter d'être cassé par des méthodes statistiques. On sait que la détection de tels chiffrements peut reposer sur une mesure d'aléatoire, par exemple par la méthode dite du $\chi^2$ (chi-carré), comme cela a été décrit par le Demandeur dans l'article : « Data Aware Defense (DaD): Towards a Generic and Practical Ransomware Countermeasure », A. Palisse, A. Durand, H. Le Bouder, C. Le Guernic and J.-L. Lanet, NordSec, Nordic Conférence on Secure IT Systems, 8th-10th November 2017, Tartu, Estonia.

Le seul usage du $\chi^2$ ou d'une autre technique de calcul d'aléatoire engendre un fort taux de faux positifs pour la détection de virus rançonneurs, c'est-à-dire de fils identifiés à tort comme des virus rançonneurs. La combinaison de la méthode du $\chi^2$ avec celle du modèle sur entête permet avantageusement de diminuer sensiblement ce taux de faux positifs

La méthode du $\chi^2$ peut comprendre le calcul de la différence entre la distribution mesurée Deb_Str (la troncature de 16ko) et une distribution théorique équiprobable des séquences de n bits, ce que l'on appelle « distribution sous hypothèse nulle ». Typiquement, n peut valoir 8 bits. Ensuite, la différence calculée sert de base au calcul d'une variance, notée usuellement $\chi^2$ (d'où le nom de la méthode). Cette variance peut alors renormalisée afin d'obtenir une quantification finale, par exemple une probabilité (comprise en 0 et 1) que Deb_str soit une chaîne de bits aléatoire.

La troncature peut être limitée à 16ko pour éviter à un virus rançonneur de ralentir ou bloquer le programme sentinelle, par exemple avec une attaque de type « bombe de décompression » (en anglais « *zip bomb* »). Une telle attaque part d'un fichier compressé de petite taille, qui, après décompression occupe une place énorme, de nature à saturer le système informatique cible. Avec une troncature limitée à la dizaine de kilo-octets, typiquement 16ko, le pire temps de calcul du $\chi^2$ sur une requête en écriture admet un majorant quelle que soit la situation.

Lorsque la chaîne de caractères est de taille inférieure à 16ko, mais supérieure à un seuil minimal, par exemple de 2ko, on effectue le même test du $\chi^2$. En revanche, si la chaîne de caractères Str est de taille inférieure à ce seuil minimal, elle est ignorée pour la prise de décision quant à la nature du fil. Le programme sentinelle 32 peut néanmoins conserver une trace de la requête en écriture pour une éventuelle restauration ultérieure, comme on le verra ci-après.

En variante, ce seuil minimal peut être différent, ou ne pas exister.

En variante, l'opération de troncature 328 peut être réalisée par la sonde HIDS, dès la duplication du contenu des requêtes en écriture, et non par le module d'analyse comportementale 302. Cela permet avantageusement d'alléger la transmission d'informations entre les différents modules.

L'utilisation du $\chi^2$ dans le cadre de contre-mesures de virus rançonneurs est actuellement préférée à l'utilisation de l'entropie de Shannon, parce que cette dernière distingue mal chiffrement et compression, contrairement à celle du $\chi^2$. En particulier, l'entropie de Shannon est sensible à la compression JPEG, laquelle compression génère un haut niveau d'entropie. L'entropie de Shannon peut néanmoins être utilisée dans certains cas.

L'opération de calcul du $\chi^2$ (ou variance) 332 peut être en variante une opération de détermination d'appartenance 339 de la variance à un intervalle de variance d'écriture aléatoire I. Cette opération d'appartenance 339 comprend la détermination de si la variance calculée à l'opération 332 est une variance typique d'une écriture aléatoire. Pour une distribution uniforme des chaînes de 8 bits (256 degrés de liberté) la médiane typique d'une écriture aléatoire est comprise dans l'intervalle de variance d'écriture aléatoire I = [212,66,301,12]. Cet intervalle de variance d'écriture aléatoire I est donné avec un risque d'erreur de 5%, c'est-à-dire qu'une écriture aléatoire a 5% de chance d'avoir une variance qui n'est pas comprise dans cet intervalle de variance d'écriture aléatoire I. Si une requête en écriture possède une variance dans cet intervalle de variance d'écriture aléatoire I, alors le programme sentinelle 32 peut la considérer comme suspecte au sens de cet indicateur du $\chi^2$. L'opération d'appartenance 339 ainsi décrite peut renvoyer la valeur binaire 1 si la variance est comprise dans l'intervalle de variance d'écriture aléatoire et la valeur binaire 0 sinon. Ces deux valeurs binaires peuvent être remplacés en variante par des entiers ou des nombres en virgule flottante, selon les besoins de typage de l'invention.

En variante, l'opération d'appartenance 339 peut comprendre le calcul de la médiane d'une pluralité de variances sur une fenêtre de temps glissante (FTG). L'opération d'appartenance 339 comprend alors les sous-opérations suivantes :

- pour chaque requête en écriture 24 émise par un fil utilisateur 20 à l'instant t, et dupliquée et transmise par la sonde HIDS 30, récupérer toutes les requêtes en écriture émises par ce fil utilisateur 20 entre le temps t-FTG et le temps t,
- calculer pour chaque requête ainsi récupérée la variance de la distribution des chaînes de 8 bits dans les 16 premiers ko de la chaîne Str, comme décrit ci-dessus,
- calculer une médiane de ces variances calculées, et
- déterminer si cette médiane est comprise dans l'intervalle de variance d'écriture aléatoire I.

Dans cette variante, la fenêtre de temps glissante FTG peut typiquement valoir une seconde (1s).

Cette variante ainsi décrite permet avantageusement de donner une réponse binaire simple comme indicateur, mais également de fortement limiter les faux positifs, pour au moins deux raisons :

- un virus rançonneur va chiffrer très rapidement un grand nombre de fichiers, tandis qu'un programme de compression (par exemple la conversion de fichiers audio non compressés .wav en fichiers audio compressés .mp3) chiffrera typiquement un toutes les quelques secondes, et
- le calcul d'une médiane de variances d'un grand nombre de requêtes rend plus stable la détection de chiffrement : au lieu d'observer un potentiel chiffrement avec 5% de chance de ne pas le détecter, on va observer un grand nombre de chiffrements potentiels avec une probabilité beaucoup plus forte de les détecter, puisque les cas « pathologiques » (c'est-à-dire les 5% de tirages aléatoires de variance non comprise dans I) seront « noyés » dans les cas « standards » (c'est-à-dire les 95% de tirages aléatoires de variance comprise dans l'intervalle I).

L'usage de la médiane plutôt que de la moyenne permet avantageusement de diminuer encore drastiquement l'influence de ces 5% de cas hors-intervalle.

En variante, l'opération de calcul de l'aléatoire peut utiliser des chaînes de Markov, un calcul d'entropie, par exemple d'entropie de Shannon, d'entropie métrique de Kolmogorov-Sinaï, d'entropie topologique de Adler-Konheim-McAndrew, d'entropie conditionnelle, d'entropie de Rényi, ou de toute autre quantification de caractère aléatoire connue. Voir à cet égard :
https://fr.wikipedia.org/wiki/Entropie

Selon d'autres variantes, le module d'analyse comportementale 302 peut comporter d'autres branches additionnelles pour estimer plus finement la valeur comportementale. Ces branches additionnelles peuvent servir à détecter spécifiquement certains patterns d'attaque de virus rançonneur ou analyser les requêtes en écriture spécifiquement sur certains formats ou extensions de fichiers comme décrit plus haut. On peut implémenter de multiples sous-modèles statistiques tels que décrits plus haut.

La méthode décrite ci-dessus à propos de la figure 4 permet également de détecter la dangerosité de requêtes en écriture qui ne modifient pas l'entête. En effet, l'entête d'un fichier comprend la date de la dernière modification, et donc toute requête en écriture régulière doit réaliser une mise à jour de cette date de dernière modification. Une requête qui ne touche pas l'entête et dont la chaîne Str possède une quantité d'aléatoire importante peut donc être fortement suspecte pour le module d'analyse comportementale 302.

La figure 5 représente un diagramme du module de décision 304 de la figure 2.

Le module de décision 304 récupère en entrée la paire requête-valeur (RE,S). Le module de décision 304 effectue une première opération de test 340 pour déterminer si la valeur comportementale S est supérieure à un premier seuil 342, ou seuil d'alerte. Ce seuil d'alerte est noté S1. Si cela est le cas, le module de décision 304 peut effectuer une opération de neutralisation 334 sur le fil d'identifiant IdT. Cette opération de neutralisation est notée NEUTR(IdT).

Cette opération de neutralisation 344 peut consister à faire disparaître (« tuer », en anglais « kill ») le fil 20 concerné, voire à tuer tout le processus 18 qui l'englobe. En variante, on peut bloquer le fil plutôt que de l'interrompre, c'est-à-dire le laisser tourner, tout en lui refusant l'exécution des instructions 22 qu'il émet.

Mais le virus rançonneur peut alors le détecter. En variante, l'opération de neutralisation 344 peut donc comprendre l'isolement du fil 20 concerné sans que le virus rançonneur ne s'en rende compte et l'inscription de l'identifiant IdT du fil (ou l'identifiant du processus) dans une table 346 des fils inopérants. Pour rendre inopérant un fil 20, l'opération de neutralisation 344 comprend l'interception de toutes ses prochaines requêtes en écriture 24 et l'émission de « faux » retour de requête 26 positifs en réponse, de sorte que le fil 20 continue de fonctionner sans avoir l'impression d'être détecté ou bloqué.

Le fait de rendre inopérant un virus rançonneur sans le tuer permet d'observer ses fonctions, sans les effectuer (ou en les effectuant dans un « bac à sable »), donc de l'étudier sans qu'il puisse causer de dégâts. L'étude de tels virus peut être utile pour mettre au point des contre-mesures spécifiques à certains virus rançonneurs. Ces contre-mesures peuvent être élaborées sur la base d'un apprentissage profond automatisé.

Dans le cas où la valeur comportementale S n'est pas supérieure au seuil d'alerte S1, le module de décision 304 effectue une deuxième opération de test 348 pour déterminer si la valeur comportementale S est supérieure à un deuxième seuil 350, ou seuil de surveillance. Ce seuil de surveillance est noté S2. Si cela est le cas, le module de décision 304 envoie l'identifiant de fil IdT au module de mise en surveillance 306.

On appelle le niveau de surveillance niveau de menace 1 et le niveau d'alerte niveau de menace 2, en référence à la hiérarchisation de la menace. Le niveau dit « courant », c'est-à-dire d'un processus agissant de manière ordinaire, est appelé niveau 0. En variante, l'invention peut comprendre d'autres niveaux de menace.

En variante, lorsque la valeur comportementale S est le produit d'une combinaison entre plusieurs indicateurs, comme décrit ci-dessus concernant la figure 4, on peut prévoir de multiples paires de seuils ($S_{1i}$, $S_{2i}$), un pour chaque indicateur utilisé. Dans la mise en œuvre de la figure 4, on prévoit ainsi quatre seuils :

- un premier seuil $S_{11}$ pour l'indicateur d'écriture sur entête
- un premier seuil $S_{12}$ pour l'indicateur $\chi^2$
- un deuxième seuil $S_{21}$ pour l'indicateur d'écriture sur entête
- un deuxième seuil $S_{22}$ pour l'indicateur $\chi^2$

Les opérations de test 340 et 348 peuvent alors comprendre le fait de déterminer si l'un des seuils est dépassé Le dépassement d'un des premiers seuils 342 (quel que soit l'indicateur) entraîne alors la neutralisation (344) du fil 20, et le dépassement d'un des deuxièmes seuils 350 (mais pas d'un des premiers) entraîne alors la mise sous surveillance (306) du fil 20.

Dans une variante, les modules d'analyse comportementale 302 et de décision 304 peuvent être subdivisés en autant de branches que d'indicateurs (valeur comportementale sur entête ou calcul du $\chi^2$), les branches étant indépendantes et parallèles les unes aux autres. Ainsi, chaque branche peut être apte à gérer le traitement d'un indicateur et la réaction adaptée pour chaque indicateur. En particulier, cela permet avantageusement à chaque branche d'être capable de détecter et appliquer seule (sans usage d'autre indicateur) des contre-mesures de virus rançonneur.

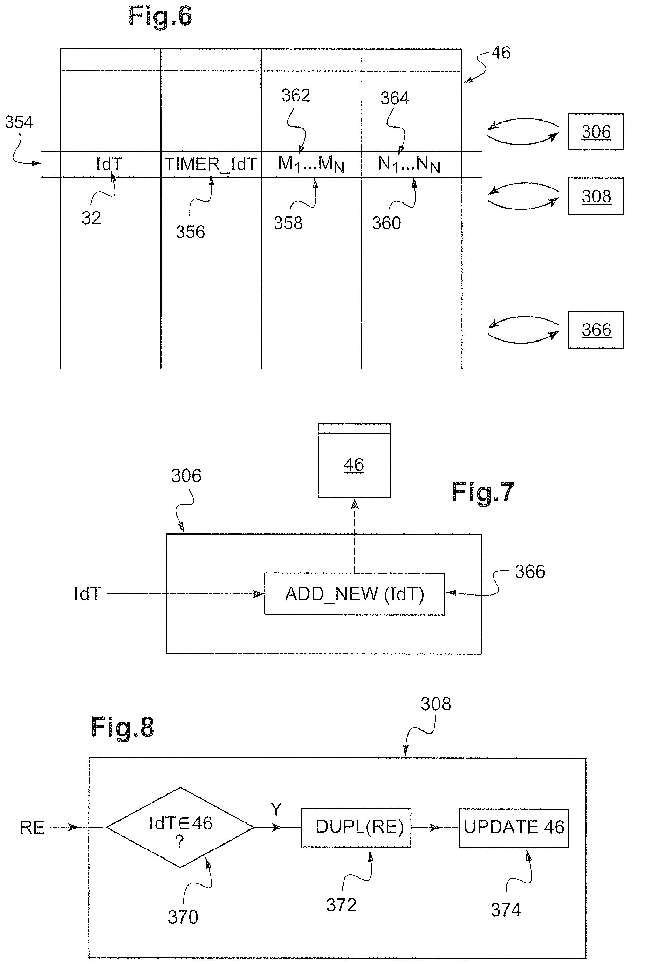

La figure 6 représente un exemple de la table de surveillance 46 de la figure 2.

Cette table comprend une pluralité de lignes de surveillance 354. Chaque ligne de surveillance 354 comprend l'identifiant de fil IdT, un minuteur 356 une liste de modifications 358 et une liste de sauvegarde 360. Ces éléments peuvent réaliser les fonctions suivantes :

- L'identifiant de fil IdT de la ligne de surveillance 354 identifie le fil 20 à surveiller.
- Le minuteur 356 (en anglais « timer ») de la ligne de surveillance 354 représente le temps depuis la dernière action suspecte du fil d'identifiant IdT. Ce minuteur est noté TIMER_IdT. Il peut être également appelé temps depuis la dernière requête suspecte.
- La liste de modifications 358 de la ligne de surveillance 354 est notée (M_1,...,M_n). Cette liste de modifications 358 comprend la position de chaque modification 362 (notée M) sur un fichier par le fil d'identifiant IdT depuis que le fil d'identifiant IdT est sous surveillance. Chaque modification est calculée à partir de l'identifiant du fichier IdF, de la position d'écriture Ofs et de la chaîne de caractères Str de la requête d'écriture 24.
- La liste de sauvegarde 360 de la ligne de surveillance 354 est notée (S_1,...,S_n). Cette liste de sauvegarde 360 comprend l'emplacement des sauvegardes (ou duplications) des portions de fichiers dupliqués par le module de surveillance 308 avant toute requête en écriture du fil d'identifiant IdT suspect.

La table de surveillance 46 peut réaliser une correspondance entre la liste de modifications 358 et la liste de sauvegarde 360.

En variante, la table de surveillance 46 peut employer des méthodes de logiciel de gestion de versions (ou « versionnement », en anglais « versioning ») de fichiers, par exemple des méthodes issues du programme « git », afin de maintenir à jour une liste de modifications des fichiers affectés par un fil suspect.
A cet égard, voir : https://fr.wikipedia.org/wiki/Git

Cette table de surveillance 46 est ainsi prévue pour :

- lister tous les fils 20 à surveiller,
- indiquer depuis combien de temps est-ce que le fil est surveillé, ce qui permet notamment de cesser de surveiller un fil lorsqu'il n'a pas émis de requête suspecte pendant une certaine durée, dite durée de surveillance 364,
- conserver une trace de toutes les modifications de chaque fil 20 d'identifiant IdT mis sous surveillance afin de pouvoir annuler presque toutes ses requêtes en écriture s'il s'avérait que le fil 20 était un virus rançonneur.

Cette table de surveillance comprend également un organe de mise à jour 366 qui va effectuer des passes de mise à jour de la table de surveillance 46, en parcourant la table de surveillance pour supprimer ou archiver les lignes de surveillance 354 lorsque leur minuteur 356 respectif dépasse la durée de surveillance 364.

La durée de surveillance 364 peut typiquement être de 5 à 10 minutes. Les passes de l'organe de mise à jour peuvent typiquement être toutes les minutes ou toutes les 30 secondes.

Cette table de surveillance 46 permet avantageusement de limiter la quantité de fils 20 à surveiller. En effet, si un fil 20 alerte le programme sentinelle 32 en activant le seuil S2 mais pas le seuil S1, alors ce fil 20 n'est pas nécessairement une menace claire mais une menace potentielle. Auquel cas il est placé sous surveillance.

Si à l'avenir, le fil 20 ne se révèle pas de nouveau suspect pendant la durée de surveillance 364, alors il est plausible que le fil 20 ait été un faux positif du module d'analyse comportementale 302 et du module de décision 304. Dans ce cas, le fil 20 n'est plus surveillé, et les fichiers qu'il vise avec des requêtes d'écriture ne sont plus systématiquement dupliqués, ce qui permet de contenir le coût en calcul du programme sentinelle 32.

Ainsi, seuls restent dans la table de surveillance 46 les fils 20 émettant suffisamment régulièrement des requêtes en écriture suspectes.

En variante, le minuteur 356 peut être remplacé par un horodatage (« timestamping » en anglais) de dernière requête suspecte. Dans ce cas, lors de chaque passe de mise à jour de l'organe de mise à jour 366, ce dernier va pour chaque horodatage vérifier s'il n'est pas antérieur à la date actuelle moins la durée de surveillance 364.

L'exemple de table de surveillance 46 qui vient d'être décrit est simple, pour éviter d'alourdir la description. On peut utiliser pour la table une structure différente, plus complète, pour permettre par exemple un horodatage de chaque instruction d'un fil 20 sous surveillance.

La figure 7 représente le module de mise sous surveillance 306 de la figure 2.

Le module de mise sous surveillance 306 reçoit en entrée un identifiant de fil IdT. Le module de mise sous surveillance 306 va d'abord chercher (366) si le fil 20 d'identifiant IdT est déjà présent dans la table de surveillance 46.

Le cas échéant, ce fil 20 d'identifiant IdT est déjà sous surveillance. Comme ce fil vient d'émettre une nouvelle requête en écriture 24 suspecte, le module de mise sous surveillance 306 remet (368) son minuteur (ou temps depuis la dernière requête suspecte) à 0.

Lorsque le fil 20 d'identifiant IdT n'est pas dans la table de surveillance 46, cela signifie que ce fil 20 est soit nouvellement suspect, soit n'a pas émis de requête suspecte depuis longtemps (plus que la durée de surveillance 364). Le module de mise sous surveillance 306 insère (370) alors une nouvelle ligne de surveillance 354 dans la table de surveillance 46. Cette nouvelle ligne de surveillance 354 comprend : l'identifiant de fil IdT, un minuteur TIMER_IdT initialisé à 0, une liste de modifications 358 initialement vide, et une liste de sauvegardes 360 initialement vide.

En variante, lorsqu'un fil 20 d'un processus 18 d'identifiant IdP est mis sous surveillance par le module de mise sous surveillance 306, l'ensemble ou une partie des fils 20 du processus IdP peut être mise sous surveillance.

La figure 8 représente le module de surveillance 308 de la figure 2.

Il reçoit en entrée la requête d'écriture RE et commence par rechercher (366) l'identifiant IdT du fil dans la table de surveillance 46.

Si l'identifiant du fil IdT est inscrit dans la table de surveillance, alors ce fil 20 est déjà suspect à cause d'une requête antérieure.

Dans ce cas d'une nouvelle requête sur un fil 20 déjà suspect, le module de surveillance 308 peut alors protéger le système informatique en « sauvegardant » les fichiers concernés par une requête dudit fil 20 déjà suspect avant leur modification

Pour ce faire, le module de surveillance 308 duplique (372) la portion du fichier d'identifiant IdF qui est concernée par la requête en écriture courante 24 du fil 20. Cette portion de fichier IdF étant en voie d'être remplacée par la chaîne Str, la duplication (372) est prioritaire sur l'écriture 24 de la chaîne Str. Cela est possible du fait que le module de surveillance 308 est dans le noyau 12 contrairement au fil 20 qui est dans l'espace utilisateur 14.

Ainsi, quelle que soit l'opération d'écriture réalisée par un fil 20 déjà suspect, elle pourra être inversée si ce fil 20 est considéré ultérieurement comme un virus rançonneur, ou toute autre menace. Pour inverser les écritures d'un fil 20, on peut procéder à l'écriture sur les emplacements modifiés du fichier IdF des portions dupliquées, dont les emplacements sont conservés dans la table de surveillance 46. Ainsi, le fichier modifié par le virus rançonneur peut retourner à un état antérieur à l'action dudit virus, en cas d'attaque avérée.

Le programme de surveillance 308 va alors stocker les portions de fichiers dupliquées et leurs emplacements dans un fichier de sauvegarde dans la mémoire de masse. Ce fichier de sauvegarde est invisible aux processus 18 et fils 20 utilisateurs.

Une fois la duplication réalisée, le module de surveillance 308 effectue une mise à jour 374 de la table de surveillance 46 pour y ajouter la nouvelle duplication réalisée.

Le module de surveillance 308 opère en parallèle de la chaîne 302-304-306 qui détermine quels sont les fils à surveiller. Ainsi, cette séparation permet avantageusement de ne dupliquer que les fils déjà considérés comme suspects, sans avoir besoin de les réanalyser avant duplication. Cette solution est plus économe en temps de calcul. En contrepartie, cette solution implique que le premier fichier modifié par une requête en écriture d'un fil ultérieurement considérée comme suspecte est perdu. Il s'agit d'un compromis acceptable dans la mesure où la force des virus rançonneurs repose sur la grande quantité de fichiers chiffrés sur un ordinateur.

En variante, le programme sentinelle 32 peut mettre sous surveillance (348) un fil utilisateur 20 au bout de trois requêtes en écriture 24 suspectes, et non plus une seule requête. L'émission de trois requêtes en écriture 24 suspectes, nécessaires pour être mis sous surveillance, peut ne pas être bornée dans le temps. Dit autrement, le programme sentinelle 32 prend en compte tout l'historique d'un fil utilisateur 20. Cette variante permet avantageusement de détecter des virus rançonneurs chiffrant lentement des fichiers.

En variante, le programme sentinelle peut coopérer avec une table de fils neutralisés, et avec un module de neutralisation qui neutralise chaque requête émise par le fil neutralisé. Cette table peut également comprendre le traitement préférentiel appliqué à chaque fil, afin de neutraliser différemment certains fils de d'autres, par exemple en isolant certains et en interrompant d'autres. Ainsi, il est possible d'économiser encore un peu de puissance de calcul, en n'analysant pas les fils déjà neutralisés.

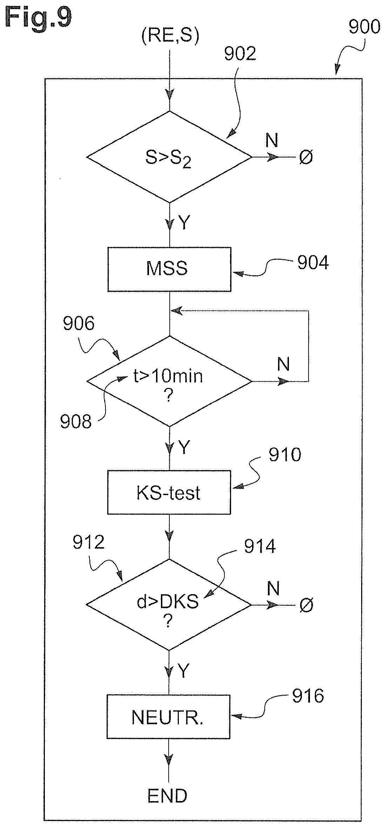

La figure 9 représente une variante du module de décision 304 de la figure 2.

Cette variante est appelée module de décision séquentielle 900. Le module de décision séquentielle 900 reçoit en entrée la paire requête-valeur 314 et vérifie (902) si la valeur comportementale S est supérieure à un seuil de surveillance $S_2$. Le cas échéant, le module de décision séquentielle 900 met sous surveillance active (904) le fil utilisateur 20 d'identifiant IdT, via le module de mise sous surveillance 306.

Le module de décision séquentielle 900 peut donc effectuer une opération de surveillance active 906 du fil 20 suspecté pendant une durée de collecte 908, typiquement pendant dix minutes. Puis au terme de cette durée de collecte 908, le module de décision séquentielle 900 peut effectuer une ou une pluralité d'analyses statistiques afin de déterminer si le fil 20 surveillé est un virus rançonneur ou non.

On note TMS l'instant où le fil utilisateur 20 est mis sous surveillance active. On note DDC la durée de collecte 908. DDC peut valoir typiquement 10 minutes.

Le module de décision séquentielle 900 peut collecter l'ensemble des requêtes en écriture 24 du fil 20 durant la durée de collecte 908, ainsi que l'ensemble des requêtes en écriture 24 des processus 18 et fils 20 du système tout entier. On appelle l'ensemble des requêtes en écriture 24 des processus 18 et fils 20 du système entier ainsi collecté « ensemble sain ». On appelle l'ensemble des requêtes en écriture 24 du fil 20 ainsi collecté « ensemble suspect ». Les requêtes en écritures 24 comprises dans l'ensemble suspect sont collectées à partir des requêtes en écritures 24 émises par le fil entre l'instant TMS et l'instant TMS + DDC.

Dans une première variante les requêtes en écritures 24 comprises dans l'ensemble sain sont collectées rétroactivement à partir des requêtes en écritures 24 émises par le système entier entre l'instant TMS-DDC et l'instant TMS. Afin de faciliter cette collecte et limiter les redondances, le programme sentinelle peut comprendre une table d'historique agencée pour contenir un historique des requêtes en écriture émises durant les DDS dernières minutes.

Dans une deuxième variante, les requêtes en écritures 24 comprises dans l'ensemble sain sont également collectées à partir des requêtes en écritures 24 émises par le système entier entre l'instant TMS et l'instant TMS + DDC.

Pour chaque requête, qu'elle provienne du fil 20 surveillé ou du système entier, le module de décision séquentielle 900 effectue dans l'opération 910 les étapes suivantes :

- le calcul d'un indicateur J (par exemple le test de vraisemblance ou le calcul de variance) tels que décrit plus haut,
- la détermination d'une première courbe de distribution cumulée (ou « CDF » en anglais) selon l'indicateur J pour l'ensemble suspect, et
- la détermination d'une deuxième courbe de distribution cumulée pour l'ensemble sain.

La première courbe de distribution cumulée est nommée « trace suspecte » et notée D1, et la seconde est nommée « trace saine » et notée D2.

A cet égard, voir : https://en.wikipedia.org/wiki/Empirical_distribution_function

Afin de déterminer si le fil 20 ainsi mis sous surveillance est une menace avérée, notamment un virus rançonneur, le module de décision séquentielle 900 peut réaliser un test de Kolmogorov-Smirnov (ou « KS-test »). Ce test comprend le calcul d'une distance statistique d entre la trace saine et la trace suspecte. Cette distance d peut être calculée selon la formule ci-dessous :

$$d = \sup_x | D1(x) - D2(x)|$$

Où x est un entier allant de 0 à $2^n-1$, où $n$ est le nombre de bits considéré pour la distribution de chaînes de n bits préalablement calculée. Cette distance d s'interprète ainsi : il s'agit de la distance (dans un sens abstrait) entre les deux traces saine et suspecte. Si elle est nulle, c'est que les deux traces sont régies par la même loi statistique ou probabiliste. Si cette distance est grande, alors il est probable que ces deux ensembles sain et suspect soient régis par des lois sous-jacentes différentes. Par exemple, si l'ensemble suspect est régi par une loi de probabilité uniforme (ex : un virus rançonneur en train de chiffrer rapidement) et l'ensemble sain par une écriture usuelle (ou ordinaire) sur fichier. A cet égard, voir : https://en.wikipedia.org/wiki/Kolmogorov%E2%80%93Smirnov_test

Le KS-test a pour avantage de ne pas être un test paramétrique, c'est-à-dire qu'il ne dépend d'une hypothèse sur la distribution des données. De plus, les variations de taille des échantillons observés n'est pas un obstacle dans la version du KS-test la plus générale.

Les distances DKS typiques utilisées pour l'opération 912 sont de 0.44 pour l'indicateur d'écriture sur entête avec test de vraisemblance logarithmique et de 0.26 pour le calcul de la variance.

L'invention peut comprendre en variante d'autres branches additionnelles munies d'autres indicateurs.

En variante, cette mise sous surveillance 904 du fil 20 ne se fait qu'au bout de trois requêtes en écriture 24 dont la valeur comportementale 312 dépasse le seuil $S_2$. Cette solution permet avantageusement d'alléger l'exécution du programme sentinelle 32, car la mise sous surveillance 304 avec collecte est une étape lourde en calcul, quoique très efficace.

En variante, la collecte réalisée pendant l'opération de surveillance active 906 peut comprendre la collecte des seules dernières requêtes en écriture 24 (en nombre NWR) pour le système entier et/ou pour le fil utilisateur 20 surveillé. NWR est un nombre entier, typiquement de l'ordre de 10.000, qui peut être ajusté afin de contrôler l'impact du programme sentinelle 32 sur les performances de l'ordinateur 1, en particulier sur la mémoire vive 9. Si la table d'historique décrite plus haut est mise en œuvre, elle peut alors comprendre un module pour nettoyer de la table d'historique les requêtes en écritures qui ne sont plus prises en compte.

## Revendications

1. Dispositif de détection de chiffrement, comprenant :

   - un ordinateur (1) avec une unité centrale (4) et une mémoire, qui comprend une mémoire vive (9) et une mémoire de masse (6) comprenant des fichiers, l'unité centrale (4) coopérant avec la mémoire vive (9), et avec un système d'exploitation (10) qui possède un noyau (12) et est capable de faire exécuter par l'unité centrale (4) des processus (18), découpés en fils (20), qui peuvent comprendre des fonctions d'accès aux fichiers, un modèle statistique d'écriture ordinaire sur entête de fichier (44) stocké dans la mémoire (6,9), et un programme sentinelle (32) actif au niveau du noyau (12) et agencé pour :

     - récupérer (30) les requêtes en écriture (24) dans un fichier (8), émises par chaque fil (20), de telles requêtes (24) comprenant comme argument une chaîne de caractères (38) à écrire,
     - calculer (302) une première grandeur d'écart (312) en fonction de la partie (319) de la chaîne de caractères (38) concernant l'entête du fichier et du modèle statistique d'écriture sur entête (44), puis
     - délivrer une première alerte (340) si la première grandeur d'écart (312) dépasse un premier seuil (342).

2. Dispositif de détection de chiffrement selon la revendication précédente, **caractérisé en ce que** le programme sentinelle (32) délivre également une deuxième alerte (348) si la première grandeur d'écart (312) est supérieure à un deuxième seuil (350), inférieur au premier seuil (342).

3. Dispositif de détection de chiffrement selon la revendication précédente, **caractérisé en ce que** le programme sentinelle (32) est agencé pour :

   a) définir une grandeur critique tirée de la première grandeur d'écart (312),
   b) neutraliser (344) le fil (20) lorsque la grandeur critique dépasse le premier seuil (342),
   c) mettre sous surveillance (306) le fil (20) lorsque la grandeur critique dépasse le deuxième seuil (350) mais pas le premier seuil (342), et
   pour un fil (20) qui est déjà sous surveillance (308),
   d) dupliquer (372) au moins partiellement des fichiers (8) visés par une requête d'écriture (24) d'un tel fil (20), et
   e) cesser de surveiller le fil (20) si, au terme d'un délai prédéfini (364), le fil (20) n'a pas émis de requête en écriture (24) dont la grandeur critique est supérieure au deuxième seuil (350).

4. Dispositif de détection de chiffrement selon la revendication 3, **caractérisé en ce que** la neutralisation (344) d'un fil (20) comprend l'une au moins des actions du groupe qui comprend : tuer le fil (20), bloquer le fil (20), isoler le fil (20).

5. Dispositif de détection de chiffrement selon l'une des revendications précédentes, **caractérisé en ce que** le modèle statistique (44) comprend une loi de probabilité (316), et **en ce que** le calcul de la première grandeur d'écart (312) comprend le calcul d'une vraisemblance (320) par rapport à cette loi de probabilité (316) du modèle statistique (44).

6. Dispositif de détection de chiffrement selon la revendication 5, **caractérisé en ce que** la loi de probabilité (316) comprend une loi de distribution de chaînes de m bits dans les entêtes de fichiers d'un corpus prédéterminé de fichiers (310), où m est un entier strictement positif inférieur à la taille d'entête maximale des fichiers dudit corpus prédéterminé (310).

7. Dispositif de détection de chiffrement selon l'une des revendications 3 à 6, **caractérisé en ce que** le programme sentinelle (32) est en outre agencé pour :

- calculer (326) une grandeur de quantification du caractère aléatoire (334) de la chaîne de caractères (38),
- calculer (336) une deuxième grandeur d'écart (338), tirée des de la première grandeur d'écart (312) et de la grandeur de quantification du caractère aléatoire (334), et
- réitérer les étapes b) à e) en utilisant la deuxième grandeur d'écart (338) comme grandeur critique.

8. Dispositif de détection de chiffrement selon la revendication 7, **caractérisé en ce que** le calcul (326) de la quantification du caractère aléatoire (334) comprend un calcul (332) d'un chi-carré d'une troncature à gauche (328,330) de la chaîne de caractères (38).

9. Dispositif de détection de chiffrement selon l'une des revendications précédentes **caractérisé en ce qu'**il est appliqué comme contre-mesure des logiciels de rançon.

10. Procédé de détection de chiffrement mis en œuvre dans un dispositif informatique et comprenant les opérations suivantes :

a) prévoir un modèle statistique d'écriture ordinaire sur entête (44),
b) récupérer (30) les requêtes en écriture (24) dans un fichier (8), émises par chaque fil (20), de telles requête (24) comprenant une chaîne de caractères (38) à écrire,
c) calculer (320) une première grandeur d'écart (312) en fonction de la partie (319) de la chaîne de caractères (38) concernant l'entête du fichier et du modèle statistique d'écriture sur entête (44), puis
d) délivrer une première alerte (340) si la première grandeur (312) dépasse un premier seuil (342).

**Patentansprüche**

1. Vorrichtung zum Erkennen einer Verschlüsselung, umfassend:

- einen Computer (1) mit einer Zentraleinheit (4) und einem Speicher, der einen Direktzugriffsspeicher (9) und einen Massenspeicher (6) umfasst, welcher Dateien umfasst,

wobei die Zentraleinheit (4) mit dem Direktzugriffsspeicher (9) und mit einem Betriebssystem (10) zusammenarbeitet, das einen Kernel (12) besitzt und in der Lage ist, durch die Zentraleinheit (4) Prozesse (18) ausführen zu lassen, die in Threads (20) aufgeteilt sind, welche Funktionen zum Zugriff auf die Dateien umfassen können,
ein statistisches Modell des normalen Schreibens in den Datei-Header (44), das im Speicher (6, 9) gespeichert ist, und ein Sentinel-Programm (32), das auf Ebene des Kernels (12) aktiv und so eingerichtet ist, dass es:

- die Anforderungen zum Schreiben (24) in eine Datei (8), die von jedem Thread (20) gestellt werden, abruft (30), wobei solche Anforderungen (24) als Argument eine Zeichenkette (38) umfassen, die geschrieben werden soll,
- in Abhängigkeit von dem Teil (319) der Zeichenkette (38), der den Header der Datei betrifft, und dem statistischen Modell des Schreibens in den Header (44) eine erste Abweichungsgröße (312) berechnet (302), und anschließend
- eine erste Warnung (340) ausgibt, wenn die erste Abweichungsgröße (312) eine erste Schwelle (342) übersteigt.

2. Vorrichtung zum Erkennen einer Verschlüsselung nach dem vorstehenden Anspruch, **dadurch gekennzeichnet, dass** das Sentinel-Programm (32) ebenfalls eine zweite Warnung (348) ausgibt, wenn die erste Abweichungsgröße (312) größer ist als eine zweite Schwelle (350), welche niedriger ist als die erste Schwelle (342).

3. Vorrichtung zum Erkennen einer Verschlüsselung nach dem vorstehenden Anspruch, **dadurch gekennzeichnet, dass** das Sentinel-Programm (32) so eingerichtet ist, dass es:

a) eine kritische Größe definiert, die sich aus der ersten Abweichungsgröße (312) ableitet,

b) den Thread (20) unschädlich macht (344), wenn die kritische Größe die erste Schwelle (342) übersteigt,

c) den Thread (20) unter Überwachung stellt (306), wenn die kritische Größe die zweite Schwelle (350), nicht aber die erste Schwelle (342) übersteigt, und

bei einem Thread (20), der bereits unter Überwachung steht (308),

d) Dateien (8), auf die eine Schreibanforderung (24) eines solchen Threads (20) abzielt, mindestens teilweise dupliziert (372), und

e) das Überwachen des Threads (20) beendet, wenn am Ende einer vordefinierten Zeit (364) der Thread (20) keine Schreibanforderung (24) gestellt hat, deren kritische Größe größer ist als die zweite Schwelle (350).

4. Vorrichtung zum Erkennen einer Verschlüsselung nach Anspruch 3, **dadurch gekennzeichnet, dass** das Unschädlichmachen (344) eines Threads (20) mindestens eine der Aktionen aus der Gruppe umfasst, welche umfasst: Vernichten des Threads (20), Blockieren des Threads (20), Isolieren des Threads (20).

5. Vorrichtung zum Erkennen einer Verschlüsselung nach einem der vorstehenden Ansprüche, **dadurch gekennzeichnet, dass** das statistische Modell (44) ein Wahrscheinlichkeitsgesetz (316) umfasst, und dadurch, dass die Berechnung der ersten Abweichungsgröße (312) das Berechnen einer Plausibilität (320) in Bezug auf dieses Wahrscheinlichkeitsgesetz (316) des statistischen Modells (44) umfasst.

6. Vorrichtung zum Erkennen einer Verschlüsselung nach Anspruch 5, **dadurch gekennzeichnet, dass** das Wahrscheinlichkeitsgesetz (316) ein Gesetz bezüglich der Verteilung von m-Bit-Ketten in den Headern von Dateien eines vorbestimmten Dateikorpus (310) umfasst, wobei m eine streng positive ganze Zahl ist, die kleiner als die maximale Header-Größe der Dateien des vorbestimmten Korpus (310) ist.

7. Vorrichtung zum Erkennen einer Verschlüsselung nach einem der Ansprüche 3 bis 6, **dadurch gekennzeichnet, dass** das Sentinel-Programm (32) weiter so eingerichtet ist, dass es:

- eine Größe zur Quantifizierung des Zufallscharakters (334) der Zeichenkette (38) berechnet (326),
- eine zweite Abweichungsgröße (338) berechnet (336), die sich aus der ersten Abweichungsgröße (312) und der Größe zur Quantifizierung des Zufallscharakters (334) ableitet, und
- die Schritte b) bis e) unter Verwendung der zweiten Abweichungsgröße (338) als kritische Größe wiederholt.

8. Vorrichtung zum Erkennen einer Verschlüsselung nach Anspruch 7, **dadurch gekennzeichnet, dass** die Berechnung (326) der Quantifizierung des Zufallscharakters (334) ein Berechnen (332) eines Chi-Quadrats einer linken Trunkierung (328, 330) der Zeichenkette (38) umfasst.

9. Vorrichtung zum Erkennen einer Verschlüsselung nach einem der vorstehenden Ansprüche, **dadurch gekennzeichnet, dass** sie als Gegenmaßnahme gegen Ransomware angewendet wird.

10. Verfahren zum Erkennen einer Verschlüsselung, das in einer Informatikvorrichtung umgesetzt wird und die folgenden Operationen umfasst:

a) Vorsehen eines statistischen Modells des normalen Schreibens in den Header (44),
b) Abrufen (30) der Anforderungen zum Schreiben (24) in eine Datei (8), die von jedem Thread (20) gestellt werden, wobei solche Anforderungen (24) eine Zeichenkette (38) umfassen, die geschrieben werden soll,
c) Berechnen (320) einer ersten Abweichungsgröße (312) in Abhängigkeit von dem Teil (319) der Zeichenkette (38), der den Header der Datei betrifft, und dem statistischen Modell des Schreibens in den Header (44), und anschließend
d) Ausgeben einer ersten Warnung (340), wenn die erste Größe (312) eine erste Schwelle (342) übersteigt.

## Claims

1. An encryption detection device, comprising:

- a computer (1) with a central processing unit (4) and a memory, which comprises a random access memory (9) and a mass memory (6) comprising files, the central unit (4) cooperating with the random access memory (9), and with an operating system (10) which has a kernel (12) and is capable of executing by the central unit (4) processes (18), cut into threads (20), which may comprise functions for accessing files, a statistical model of ordinary file header writing (44) stored in the memory (6, 9), and a sentinel program (32) active at the kernel (12) and arranged to:

- retrieve (30) the write requests (24) in a file (8), emitted by each thread (20), such requests (24) comprising a character string (38) to be written as argument,
- calculate (302) a first deviation quantity (312) according to the part (319) of the character string (38) relating to the header of the file and according to the statistical model for header writing (44), then
- issue a first warning (340) if the first deviation quantity (312) exceeds a first threshold (342).

2. The encryption detection device according to the preceding claim, **characterised in that** the sentinel program (32) also issues a second warning (348) if the first deviation quantity (312) is greater than a second threshold (350), less than the first threshold (342).

3. The encryption detection device according to the preceding claim, **characterised in that** the sentinel program (32) is arranged to:

   a) define a critical quantity derived from the first deviation quantity (312),
   b) neutralise (344) the thread (20) when the critical quantity exceeds the first threshold (342),
   c) place the thread (20) under monitoring (306) when the critical quantity exceeds the second threshold (350) but not the first threshold (342), and
   for a thread (20) which is already under monitoring (308),
   d) at least partially duplicate (372) files (8) targeted by a write request (24) of such a thread (20), and
   e) stop monitoring the thread (20) if, at the end of a predefined time period (364), the thread (20) has not emitted a write request (24) whose critical quantity is greater than the second threshold (350).

4. The encryption detection device according to claim 3, **characterised in that** the neutralisation (344) of a thread (20) comprises at least one of the actions of the group which comprises: killing the thread (20), blocking the thread (20), insulating the thread (20).

5. The encryption detection device according to one of the preceding claims, **characterised in that** the statistical model (44) comprises a probability law (316), and **in that** the calculation of the first deviation quantity (312) comprises the calculation of a likelihood (320) relative to this probability law (316) of the statistical model (44).

6. The encryption detection device according to claim 5, **characterised in that** the probability law (316) comprises a law of distribution of m-bit strings in the file headers of a predetermined corpus of files (310), where m is a strictly positive integer less than the maximum header size of the files of said predetermined corpus (310).

7. The encryption detection device according to one of claims 3 to 6, **characterised in that** the sentinel program (32) is further arranged to:

   - calculate (326) a quantification quantity of the randomness (334) of the character string (38),
   - calculate (336) a second deviation quantity (338), derived from the first deviation quantity (312) and the quantification quantity of the randomness (334), and
   - repeat steps b) to e) using the second deviation quantity (338) as critical quantity.

8. The encryption detection device according to claim 7, **characterised in that** calculating (326) the quantification of the randomness (334) comprises calculating (332) a chi-square of a left truncation (328, 330) of the character string (38).

9. The encryption detection device according to one of the preceding claims, **characterised in that** it is applied as a countermeasure to ransomware software.

10. An encryption detection method implemented in a computer device and comprising the following operations:

   a) providing a statistical model of ordinary header writing (44),
   b) retrieving (30) the write requests (24) in a file (8), emitted by each thread (20), such requests (24) comprising a character string (38) to be written,
   c) calculating (320) a first deviation quantity (312) according to the part (319) of the character string (38) relating to the header of the file and of the statistical model for header writing (44), then

d) issuing a first warning (340) if the first quantity (312) exceeds a first threshold (342).

## Fig.1

## Fig.3

Fig.2

Fig.4

Fig.5

## Fig.6

| | | 362 | 364 | 46 |
|---|---|---|---|---|
| | | | | → 306 |
| IdT | TIMER_IdT | $M_1...M_N$ | $N_1...N_N$ | → 308 |
| 32 | 356 | 358 | 360 | |
| | | | | → 366 |

354 →

## Fig.7

46

306

IdT ——→ ADD_NEW (IdT) ←— 366

## Fig.8

308

RE ——→ ◇ IdT∈46 ? ◇ ——Y——→ DUPL(RE) ——→ UPDATE 46

370     372     374

# Fig.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018020013 A1
- US 2018018458 A1
- US 2015058987 A1

**Littérature non-brevet citée dans la description**

- **A. PALISSE ; A. DURAND ; H. LE BOUDER ; C. LE GUERNIC ; J.-L. LANET.** Data Aware Defense (DaD): Towards a Generic and Practical Ransomware Countermeasure. *NordSec, Nordic Conférence on Secure IT Systems,* 08 Novembre 2017